(19) Europäisches Patentamt
European Patent Office
Office européen des brevets

(11) **EP 4 060 207 A1**

(12) **EUROPEAN PATENT APPLICATION**
published in accordance with Art. 153(4) EPC

(43) Date of publication:
**21.09.2022 Bulletin 2022/38**

(21) Application number: **20905294.3**

(22) Date of filing: **11.12.2020**

(51) International Patent Classification (IPC):
**F16H 49/00** (2006.01)

(52) Cooperative Patent Classification (CPC):
**F16H 49/00**

(86) International application number:
**PCT/JP2020/046344**

(87) International publication number:
**WO 2021/131807 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.12.2019 JP 2019232518**

(71) Applicant: **Mitsubishi Heavy Industries, Ltd.
Tokyo 100-8332 (JP)**

(72) Inventors:
• **SHIMIZU, Takayuki**
**Tokyo 100-8332 (JP)**
• **SASAKI Mikito**
**Tokyo 100-8332 (JP)**
• **ISOBE, Shinichi**
**Tokyo 100-8332 (JP)**
• **UMEDA, Akihiko**
**Tokyo 100-8332 (JP)**
• **YUGE, Atsushi**
**Tokyo 100-8332 (JP)**

(74) Representative: **Studio Torta S.p.A.
Via Viotti, 9
10121 Torino (IT)**

(54) **MAGNETIC POLE-PIECE DEVICE AND MAGNETIC GEAR DEVICE**

(57)     A magnetic pole piece device according to an embodiment is a magnetic pole piece device disposed between an inner diameter side magnet field and an outer diameter side magnet field of a magnetic gear that includes an annular member which includes a plurality of magnetic pole pieces disposed at intervals in a circumferential direction, and a plurality of holding members respectively disposed between the plurality of magnetic pole pieces, and a cover member which is made of a composite material obtained by impregnating continuous fiber extending along the circumferential direction with a matrix resin. The cover member is disposed on at least one of an outer circumferential surface and an inner circumferential surface of the annular member. A relation of $1/6 \cdot tc \leq t \leq 1/2 \cdot tc$ is satisfied, where tc is a gap between the annular member and the magnet field and t is a thickness of the cover member.

FIG. 3

**Description**

TECHNICAL FIELD

The present disclosure relates to a magnetic pole piece device and a magnetic gear device including the magnetic pole piece device.

The present application claims priority on Japanese Patent Application No. 2019-232518 filed on December 24, 2019, the entire content of which is incorporated herein by reference.

BACKGROUND

As one type of gear device, there is a magnetic gear which utilizes an attractive force and a repulsive force of a magnet to transmit torque or motion in a non-contact manner, thereby being able to avoid a problem such as wear, vibration, or noise caused by tooth contact. Of magnetic gears, a flux-modulated type magnetic gear, which includes two inner and outer magnet rotors disposed concentrically and a modulated magnetic pole that is sandwiched between these magnet rotors, called, for example, a pole piece, and constituted by a plurality of magnetic pole pieces disposed at equal intervals in the circumferential direction, is operated as a magnetic gear by modulating magnetic fluxes of the magnets of the inner and outer rotors by the modulated magnetic pole and synchronizing the inner and outer rotors with the modulated fluxes respectively. Since all the magnets of the inner and outer rotors contribute to power transmission, the flux-modulated type magnetic gear has an advantage that the torque density is higher than that of other types of magnetic gears. Patent Documents 1 and 2 each disclose a flux-modulated type magnetic gear.

In the flux-modulated type magnetic gear, the magnet of the inner diameter side rotor and the magnet of the outer diameter side rotor are different in number of pole pairs. A modulated magnetic pole (pole piece) has a role of modulating the number of magnetic poles between the magnet of the inner diameter side rotor and the magnet of the outer diameter side rotor. If a wall thickness of the modulated magnetic pole is increased, a distance between the inner and outer magnets increases and a torque transmission efficiency decreases. Thus, there is a limitation on a wall thickness dimension of the modulated magnetic pole. Meanwhile, the modulated magnetic pole receives a magnetic force generated by the magnets of the inner and outer rotors, and requires rigidity in order to prevent radial deformation with respect to the magnetic force. In Patent Document 1, a non-magnetic reinforcement member is disposed between a plurality of magnetic pole pieces in order to give rigidity to the modulated magnetic pole. In Patent Document 2, in order to suppress that a loss is increased by an induced current (eddy current) generated in the modulated magnetic pole and torque transmission efficiency is decreased accordingly, an insulating member is provided between the modulated magnetic pole and an end portion holding member for supporting the modulated magnetic pole for electric insulation, and generation of the induced current is suppressed.

Citation List

Patent Literature

    Patent Document 1: US9425655B
    Patent Document 2: JP5286373B

SUMMARY

Technical Problem

As described above, since the modulated magnetic pole receives the magnetic force generated by the magnets of the inner and outer rotors, if rigidity is low, the modulated magnetic pole may be deformed in the radial direction and interfere with the magnets of the inner and outer rotors. Thus, for example, it is necessary to provide the modulated magnetic pole with a reinforcement member having high elastic modulus to increase rigidity. However, if the reinforcement member is made of metal having high elastic modulus, there is a problem that an eddy current is generated in the modulated magnetic pole due to the magnetism of the metal, which increases a loss and decreases the torque transmission efficiency.

The present disclosure was made in view of the above problems, and an object of the present disclosure is to suppress deformation in modulated magnetic pole against a magnetic force of the magnet without decreasing the torque transmission efficiency.

Solution to Problem

In order to achieve the above object, a magnetic pole piece device according to the present disclosure is a magnetic pole piece device disposed between an inner diameter side magnet field and an outer diameter side magnet field of a magnetic gear that includes an annular member which includes a plurality of magnetic pole pieces disposed at intervals in a circumferential direction, and a plurality of holding members respectively disposed between the plurality of magnetic pole pieces, and a cover member which is made of a composite material obtained by impregnating continuous fiber extending along the circumferential direction with a matrix resin. The cover member is disposed on at least one of an outer circumferential surface and an inner circumferential surface of the annular member. When the cover member is disposed on the outer circumferential surface of the annular member, a relation of $1/6 \cdot toc \leq to \leq 1/2 \cdot toc$ is satisfied, where toc is a gap between the outer circumferential surface of the annular member and an inner circumferential surface of the outer diameter side magnet field and to is a thickness of the cover member. When the cover member is disposed on the inner circumferential surface of the annular member, a relation of $1/6 \cdot tic \leq ti \leq 1/2 \cdot tic$ is satisfied, where tic is a gap between the inner circumferential surface of the annular member and an outer circumferential surface of the inner diameter side magnet field and ti is a thickness of the cover member.

Further, a magnetic gear device according to the present disclosure includes an inner diameter side magnet field, an outer diameter side magnet field disposed on an outer diameter side relative to the inner diameter side magnet field, and the magnetic pole piece device with the above configuration disposed between the inner diameter side magnet field and the outer diameter side magnet field.

Advantageous Effects

With the magnetic pole piece device and the magnetic gear device according to the present disclosure, since the above-described cover member is provided and the gap between the cover member and the magnet field and the thickness of the cover member have the above-described relation, it is possible to suppress the radial displacement in the annular member forming the magnetic pole piece device without decreasing the torque transmission efficiency, and it is possible to suppress that the magnetic pole piece device interferes with the magnet field. Further, since it is possible to improve the displacement resistance of the magnetic piece device, it is possible to expand the degree of freedom in design including, for example, the material of the magnetic pole piece device.

BRIEF DESCRIPTION OF DRAWINGS

FIG. 1 is a cross-sectional view of a magnetic gear according to an embodiment.
FIG. 2 is a partially enlarged view of FIG. 1.
FIG. 3 is a cross-sectional view of a magnetic pole piece device according to an embodiment.
FIG. 4 is a cross-sectional view of a magnetic pole piece device according to an embodiment.
FIG. 5 is a table showing analysis results of radial deformation in annular member as a comparative example.
FIG. 6 is a table showing analysis results of the radial deformation in annular member according to an embodiment.
FIG. 7 is a graph plotting the amount of the radial deformation among the analysis results shown in FIG. 6.
FIG. 8 is a graph plotting the amount of a residual gap amount among the analysis results shown in FIG. 6.

DETAILED DESCRIPTION

Embodiments of the present disclosure will be described below with reference to the accompanying drawings. It is intended, however, that unless particularly specified, dimensions, materials, shapes, relative positions and the like of components described in the embodiments or shown in the drawings shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, an expressions such as "comprising", "including", "having", "containing", and "constituting" one constitutional element are not intended to be exclusive of other constitutional elements.

(Configuration of magnetic gear device)

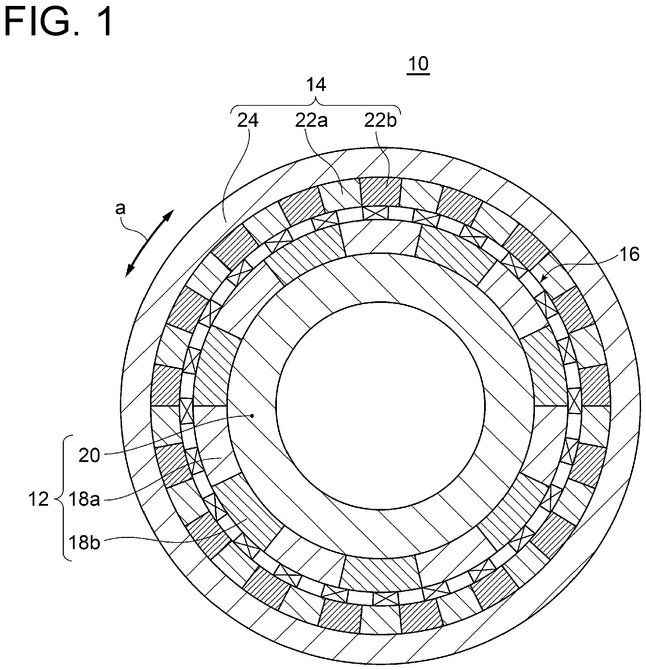

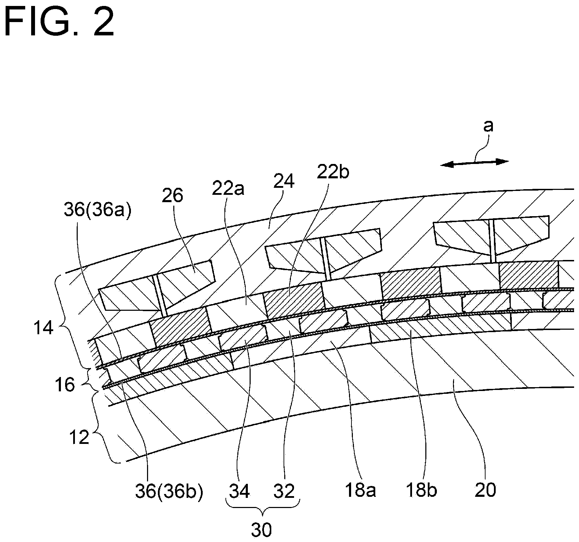

FIG. 1 is a cross-sectional view of a magnetic gear device 10 according to an embodiment, and FIG. 2 is a partially enlarged view of FIG. 1. The magnetic gear device 10 constitutes a flux-modulated type magnetic gear, and includes an inner diameter side magnet field 12, an outer diameter side magnet field 14 disposed on an outer diameter side relative to the inner diameter side magnet field 12, and a magnetic pole piece device 16 disposed between the inner diameter side magnet field 12 and the outer diameter side magnet field 14. The inner diameter side magnet field 12, the outer diameter side magnet field 14, and the magnetic pole piece device 16 are disposed concentrically. The inner diameter side magnet field 12 and the outer diameter side magnet field 14, respectively, include magnets forming a plurality of magnetic pole pairs, and the inner diameter side magnet field 12 and the outer diameter side magnet field 14 are different in the number of magnetic pole pairs. With the magnetic pole piece device 16, magnetic fluxes of the inner diameter side magnet field 12 and the outer diameter side magnet field 14 are modulated, and the inner diameter side magnet field 12 and the outer diameter side magnet field 14 are respectively synchronized with the modulated magnetic fluxes, thereby operating as the magnetic gear device.

In an embodiment, as shown in FIG. 1, the inner diameter side magnet field 12 is composed by a plurality of magnetic pole pairs 18a and 18b disposed annularly in the circumferential direction (a direction of an arrow a in FIG. 1), and a holding member 20 for supporting the magnetic pole pairs 18a and 18b. The outer diameter side magnet field 14 is composed by a plurality of magnetic pole pairs 22a and 22b disposed annularly in the circumferential direction, and a holding member 24 for supporting the magnetic pole pairs 22a and 22b. The inner diameter side magnet field 12 and the outer diameter side magnet field 14 are different in the number of magnetic pole pairs. For example, although different from the number of magnetic pole pairs shown in FIG. 1, if the number of magnetic pole pairs 22a and 22b of the outer diameter side magnet field 14 is three times the number of magnetic pole pairs 18a and 18b of the inner diameter side magnet field 12, the outer diameter side magnet field 14 rotates at a speed three times as fast as the inner diameter side magnet field 12. Thus, the rotation speed can be changed in proportion to the number of magnetic pole pairs.

Each of the holding members 20 and 24 can also function as a back yoke by being made of, for example, a magnetic material.

In an embodiment, the inner diameter side magnet field 12 and the outer diameter side magnet field 14 each include a permanent magnet, and the permanent magnet forms the magnetic pole pair. Since the magnetic pole pair is formed by the permanent magnet, a winding or the like becomes unnecessary, making it possible to simplify the configuration.

(Configuration of magnetic pole piece device)

As shown in FIG. 2, the magnetic pole piece device 16 is disposed between the inner diameter side magnet field 12 and the outer diameter side magnet field 14 of the magnetic gear device 10. The magnetic pole piece device 16 includes an annular member 30, and the annular member 30 includes a plurality of magnetic pole pieces 32 disposed at intervals in the circumferential direction, and a plurality of holding members 34 respectively disposed between the magnetic pole pieces 32. A cover member 36 (36a, 36b) is disposed on at least one of an outer circumferential surface and an inner circumferential surface of the annular member 30. The holding member 34 is made of a non-magnetic material. The holding member 34 is composed of, for example, a resin mold, a fiber reinforced plastic (FRP) alone, or an FRP impregnated with carbon staple fiber, glass staple fiber, or the like.

In an embodiment, as shown in FIG. 2, a coil 26 is wound around the holding member 24 of the outer diameter side magnet field 14. The coil 26 is configured to be wound around the outside of the magnetic pole pairs 22a and 22b.

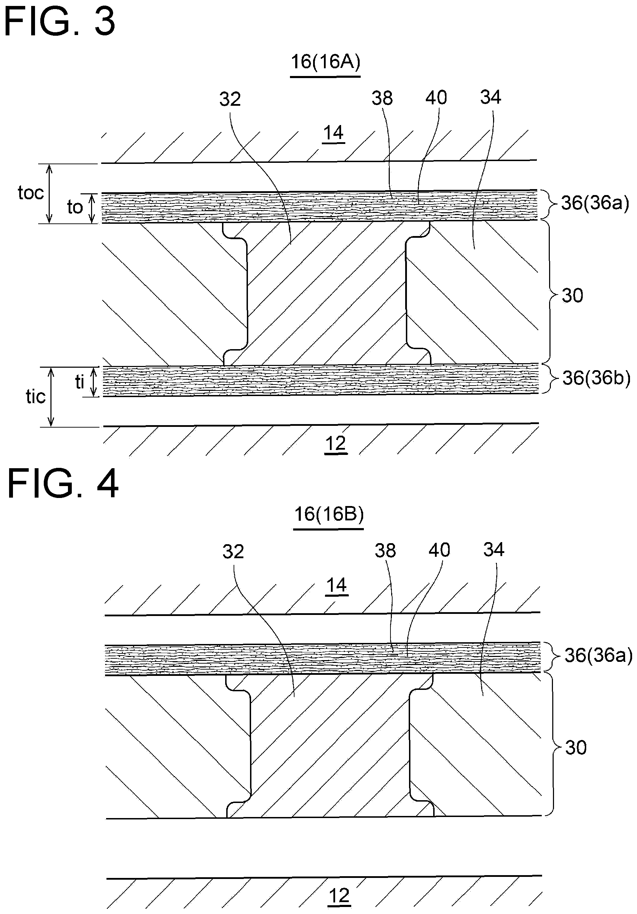

FIGs. 3 and 4 show the magnetic pole piece device 16 (16A, 16B) according to some embodiments. In the magnetic pole piece device 16 (16A, 16B), the cover member 36 (36a, 36b) is made of a composite material obtained by impregnating continuous fiber 38 extending along the circumferential direction with a matrix resin 40. Then, when the cover member 36 is disposed on the outer circumferential surface of the annular member 30, the following relational expression (1) is satisfied: where toc is a gap between the outer circumferential surface of the annular member 30 and the inner circumferential surface of the outer diameter side magnet field 14 and to is a thickness of the outer circumferential side cover member 36 (36a).

$$1/6 \cdot toc \leq to \leq 1/2 \cdot toc \tag{1}$$

On the other hand, when the cover member 36 is disposed on the inner circumferential surface of the annular member 30, the following relational expression (2) is satisfied: where tic is a gap between the inner circumferential surface of the annular member 30 and the outer circumferential surface of the inner diameter side magnet field 12 and ti is a thickness of the inner circumferential side cover member 36 (36b).

$$1/6 \cdot tic \leq ti \leq 1/2 \cdot tic \qquad\qquad (2)$$

According to these embodiments, since it is possible to reduce the radial wall thickness of the cover member 36 made of the composite material described above, an interval between the inner diameter side magnet field 12 and the outer diameter side magnet field 14 is not increased due to the presence of the cover member 36. Therefore, torque transmission efficiency is not decreased. Further, with the cover member 36, it is possible to increase the radial rigidity of the magnetic pole piece device 16, making it possible to suppress radial deformation in the annular member 30 under the formation of the magnetic field by the inner diameter side magnet field 12 and the outer diameter side magnet field 14. Therefore, it is possible to suppress that the magnetic pole piece device 16 interferes with the inner diameter side magnet field 12 or the outer diameter side magnet field 14, and by improving deformation resistance of the magnetic pole piece device 16, it is possible to expand the degree of freedom in designing the magnetic pole piece device 16 in selection of the material used for the annular member 30 or others. Further, by satisfying the above-described relational expression (1) or (2), as will be described later, it is possible to suppress the radial deformation amount of the cover member 36 and it is possible to secure the gap between the cover member 36 and the outer diameter side magnet field 14 or the inner diameter side magnet field 12. Thus, even if the cover member 36 is allowed to slightly be deformed in the radial direction, it is possible to suppress that the cover member 36 interferes with the magnet field.

As the material of the continuous fiber 38, for example, carbon fiber, glass fiber, aramid fiber, or the like can be used.

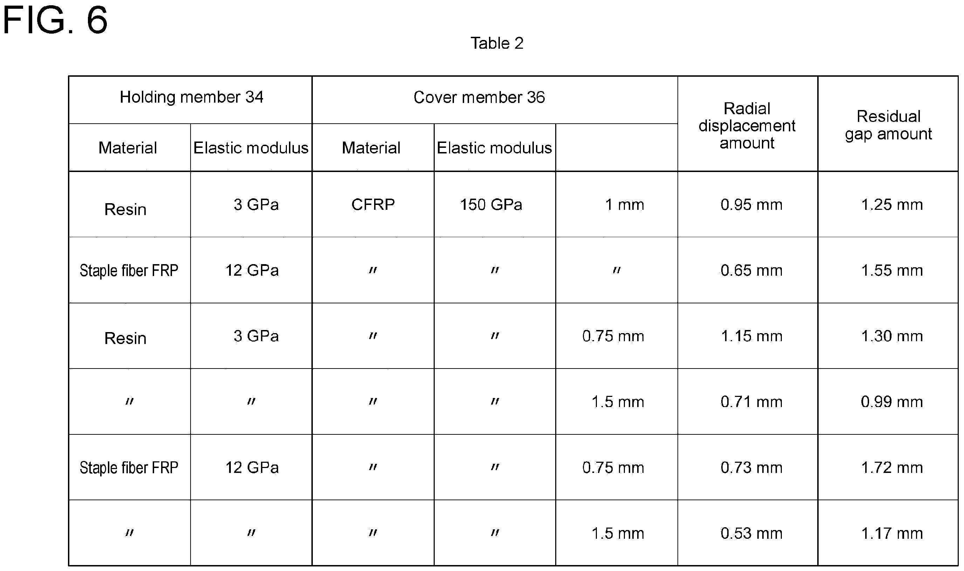

In Patent Document 1, in order to increase rigidity of a pole piece (corresponding to the magnetic pole piece device 16 of the present embodiment), as illustrated (FIG. 6a of Patent Document 1), a support structure 700 including a plurality of support bars 600 is required, complicating the configuration of a reinforcement member. By contrast, in the present embodiment, since the radial deformation resistance of the magnetic pole piece device 16 can be improved by providing the cover member 36, it is possible to simplify the configuration of the magnetic pole piece device 16.

In an embodiment, the cover member 36 is disposed in the whole circumference in the circumferential direction. Thus, it is possible to effectively suppress the radial deformation in the magnetic pole piece device 16. Meanwhile, the cover member 36 may not necessarily be disposed in the whole circumference in the circumferential direction, and may be omitted in a partial region in the circumferential direction.

In an embodiment, as shown in FIGs. 3 and 4, the cover member 36 (36a) is disposed at least on the outer circumferential surface of the annular member 30. Since it is considered that the radial deformation amount of the annular member 30 is larger on the outer circumferential surface side than on the inner circumferential surface side, it is possible to enhance the effect of suppressing the radial deformation by disposing the cover member 36 (36a) on the outer circumferential surface of the annular member 30.

In an embodiment, as shown in FIGs. 2 and 3, the cover member 36 (36a, 36b) is disposed on both the outer circumferential surface and the inner circumferential surface of the annular member 30. Since the cover member 36 is thus disposed on both the outer circumferential surface and the inner circumferential surface of the annular member 30, it is possible to further enhance the effect of suppressing the radial deformation in the annular member 30.

In an embodiment, the cover member 36 is attached to at least one of the outer circumferential surface and the inner circumferential surface of the annular member 30 via an adhesive agent. Thus, it is possible to increase a coupling force between the annular member 30 and the cover member 36, making it possible to suppress that the cover member 36 is separated from the annular member 30 and interferes with the inner diameter side magnet field 12 or the outer diameter side magnet field 14 in a region where a magnetic field is formed by the inner diameter side magnet field 12 and the outer diameter side magnet field 14.

In an embodiment, the continuous fiber 38 may be disposed in a direction inclined with respect to the circumferential direction of the cover member 36. Further, the continuous fiber 38 of the cover member 36 (36b) disposed on the inner circumferential surface of the annular member 30 and the continuous fiber 38 of the cover member 36 (36a) disposed on the outer circumferential surface of the annular member 30 may be disposed to be inclined in opposite directions with respect to the circumferential direction or the axial direction of the magnetic pole piece device 16. Thus, it is also possible to enhance the deformation resistance against a force applied from a different direction other than the circumferential direction.

(Production method for magnetic pole piece device)

In a production method for the magnetic pole piece device 16 according to an embodiment, first, the plurality of rod-shaped magnetic pole pieces 32 and holding members 34 are alternately arranged to form the cylindrical annular member 30. Next, an uncured matrix resin sheet containing the continuous fiber 38 is attached to the inner circumferential surface or the outer circumferential surface of the annular member 30 with the adhesive agent, and then the annular member 30 to which the matrix resin sheet is attached is heated and fired in a firing furnace. The annular member 30 may be divided into halves and separately put into the firing furnace for firing. This method has an advantage that the matrix resin sheet and the holding member 34 can simultaneously be cured, when the holding member 34 is made of an uncured resin mold.

In another embodiment, the cylindrical annular member 30 and the cured matrix resin sheet containing the continuous fiber 38 is produced separately, and then the matrix resin sheet is attached to the inner circumferential surface or the outer circumferential surface of the annular member 30 with the adhesive agent. This method has the advantage that the matrix resin sheet is fired independently, and thus no large firing furnace is required.

The magnetic gear device including the magnetic pole piece device according to the present disclosure can be applied as, for example, a power transmission device such as an electric motor or a generator. Further, the electric motor or the generator to which the magnetic gear according to the present disclosure is applied is applicable to, for example, a wind power generator, an electric ship propulsion device, or the like.

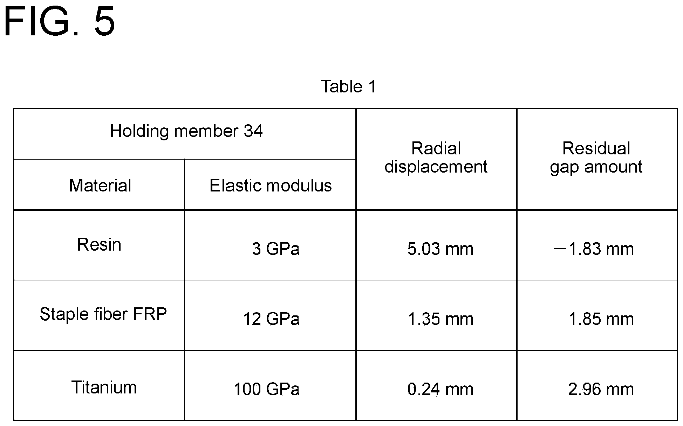

Table 1 shown in FIG. 5 shows results of analyzing the radial displacement in magnetic pole piece device without the cover member 36, as a comparative example. An electromagnetic force generated in the magnetic pole piece device by the magnet is applied, and a plurality of non-magnetic materials are targeted as the holding member 34. Since a heat loss due to an eddy current is generated in the magnetic pole piece device under the formation of the magnetic field, if a resin is used as the holding member 34, targeted is an epoxy resin or a thermosetting resin such as nylon (registered trademark) that can withstand a temperature of 80°C. The gap between the magnetic pole piece device 16 and the inner diameter side magnet field 12 or the outer diameter side magnet field 14 is usually not greater than 10 mm, and in the analysis example of Table 1 shown in FIG. 5, the gap toc or the gap tic is about 3 mm (3.2 mm). As shown in FIG. 5, the elastic modulus of a normal resin results in interference with the inner diameter side magnet field 12 or the outer diameter side magnet field 14. Although there is no interference if the staple fiber FRP is used as the holding member 34, the radial deformation amount is not less than 40% of the initial gap and greatly exceeds 1 mm. Thus, it is desirable that the deformation amount is not greater than 1 mm. The deformation amount is small if titanium is used as the holding member 34. However, since titanium is metal, the loss due to the eddy current may increase and the torque transmission efficiency may decrease.

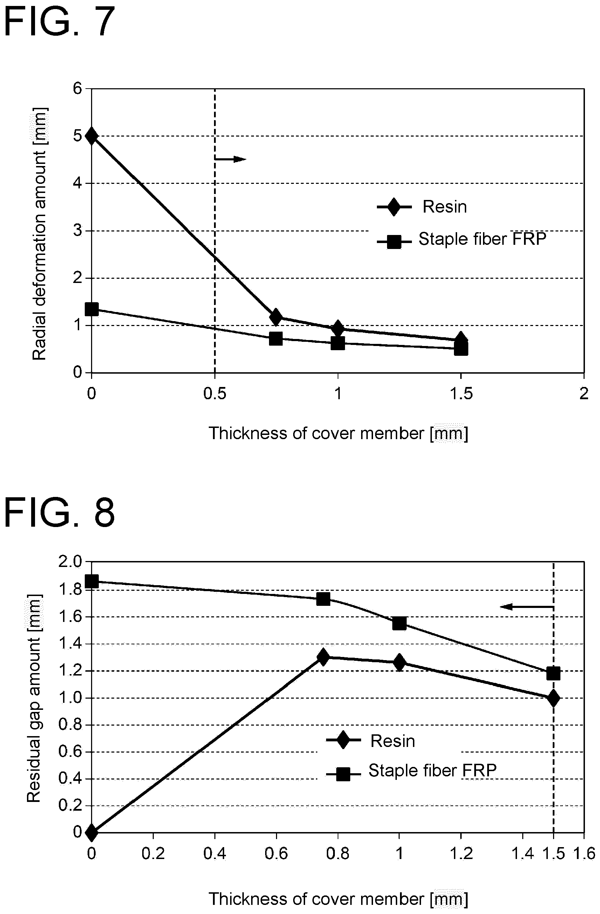

Table 2 shown in FIG. 6 shows the results of analyzing the radial displacement on the outer circumferential surface side or the inner circumferential surface side of the magnetic pole piece device 16 according to an embodiment. FIGs. 7 and 8 are graphs, respectively, plotting the analysis results shown in Table 1 and Table 2, with the thickness of the cover member 36 on the horizontal axis and the radial deformation amount or a residual gap amount on the vertical axis. In FIGs. 7 and 8, the radial deformation amount and the residual gap amount when the thickness of the cover member 36 is "0 mm" plot the analysis results (the case without the cover member 36) shown in Table 1. The gap toc or the gap tic is about 3 mm (3.2 mm) which is the same as the example in Table 1, and the holding member 34 uses the same material as the above comparative example. Further, the cover member 36 is made of the composite material obtained by impregnating the carbon fiber which is continuous in the circumferential direction with the matrix resin. In the embodiment shown in FIG. 6, although there is the example where the radial deformation amount exceeds 1 mm in some cases, the radial deformation amount is generally less than 1 mm, the deformation amount is not greater than 1/5 in the case where the holding member 34 is made of the resin, and the deformation amount is reduced to around 1/2 in the case where the holding member 34 is made of the staple fiber FRP. Thus, it is possible to suppress the radial deformation amount to a desired deformation amount of not greater than about 1 mm.

From FIG. 8, it can be seen that the larger the thickness of the cover member 36, the smaller the residual gap amount. That is, FIG. 8 shows that the effect of suppressing the radial deformation amount does not increase relative to the increase in thickness of the cover member 36. Therefore, there is an upper limit of the thickness of the cover member 36, and in the example of FIG. 8, it is desirable that the thickness to of the cover member 36 is not greater than 1.5 mm (1/2 of the gap toc or the gap tic). This is the basis for deriving the right-hand sides of the above-described relational expressions (1) and (2). On the other hand, although the residual gap amount increases if the thickness of the cover member 36 decreases, due to the increase in radial deformation amount, it is impossible to ignore the increase in magnetic force of the inner diameter side magnet field 12 or the outer diameter side magnet field 14. Therefore, there is a lower limit of the thickness of the cover member 36. From FIG. 7, in the case where the staple fiber FRP is used for the holding member 34, in order to set the radial deformation amount to not greater than 1 mm, it is necessary to set the thickness to of the cover member 36 to not less than 0.5 mm (1/6 of the gap toc or the gap tic). This is the basis for deriving the left-hand sides of the above-described relational expressions (1) and (2).

The embodiment shown in Table 2 of FIG. 6 includes a calculation example in which a resin having the elastic modulus of 3 GPa is used as the cover member 36. However, an optimum value of the thickness to or ti of the cover member 36 can vary depending on the material of the resin applied as the cover member 36. Therefore, an appropriate value is selected within a range that satisfies the above-described relational expression (1) or (2). For example, in FIG. 7, when the resin is used as the cover member 36, the thickness of the cover member 36 needs to be about 0.75 mm in order to suppress the radial deformation amount to not greater than 1 mm. That is, the thickness to or ti of the cover member 36 needs to be not less than 1/4 of the gap toc or tic.

The contents described in the above embodiments would be understood as follows, for instance.

(1) A magnetic pole piece device (16) according to an embodiment is a magnetic pole piece device (16) disposed between an inner diameter side magnet field (12) and an outer diameter side magnet field (14) of a magnetic gear (10) that includes an annular member (30) which includes a plurality of magnetic pole pieces (32) disposed at intervals in a circumferential direction (a direction of an arrow a in FIG. 1), and a plurality of holding members (34) respectively disposed between the plurality of magnetic pole pieces (32), and a cover member (36) which is made of a composite material obtained by impregnating continuous fiber (38) extending along the circumferential direction with a matrix resin (40). The cover member (36) is disposed on at least one of an outer circumferential surface and an inner circumferential surface of the annular member (30). When the cover member (36) is disposed on the outer circumferential surface of the annular member (30), a relation of $1/6 \cdot toc \leq to \leq 1/2 \cdot toc$ is satisfied, where toc is a gap between the outer circumferential surface of the annular member (30) and an inner circumferential surface of the outer diameter side magnet field (14) and to is a thickness of the cover member (36 (36a)). When the cover member (36) is disposed on the inner circumferential surface of the annular member (30), a relation of $1/6 \cdot tic \leq ti \leq 1/2 \cdot tic$ is satisfied, where tic is a gap between the inner circumferential surface of the annular member (30) and an outer circumferential surface of the inner diameter side magnet field (12) and ti is a thickness of the cover member (36 (36b)).

With the magnetic pole piece device according to the present disclosure, since it is possible to reduce the wall thickness of the above-described cover member, the torque transmission efficiency is not decreased. Further, since the gap between the cover member and the magnet field and the thickness of the cover member has the above-described relation, it is possible to suppress the radial deformation in the annular member under the magnetic field formation, and it is possible to secure the gap between the cover member and the outer diameter side magnet field or the inner diameter side magnet field. Thus, even if the cover member is allowed to slightly be deformed in the radial direction, it is possible to suppress that the cover member interferes with the magnet field.

(2) The magnetic pole piece device (16) according to another aspect is the magnetic pole piece device defined in (1), where the cover member (36) is disposed on at least the outer circumferential surface of the annular member (30).

With such configuration, since the cover member is disposed on the outer circumferential surface which is considered having the larger radial deformation amount than the inner circumferential surface, it is possible to enhance the effect of suppressing the radial deformation.

(3) The magnetic pole piece device (16 (16A)) according to another aspect is the magnetic pole piece device defined in (2), where the cover member (36) is disposed on both the outer circumferential surface and the inner circumferential surface of the annular member (30).

With such configuration, since the cover member is disposed on both the outer circumferential surface and the inner circumferential surface of the annular member, it is possible to further enhance the effect of suppressing the radial deformation in the cover member.

(4) The magnetic pole piece device (16) according to another aspect is the magnetic pole piece device defined in any one of (1) to (3), where the cover member (36) is attached to at least one of the outer circumferential surface and the inner circumferential surface of the annular member (30) via an adhesive agent.

With such configuration, since the cover member is attached to at least one of the outer circumferential surface or the inner circumferential surface via the adhesive agent, it is possible to increase the coupling force between the annular member and the cover member. Therefore, it is possible to suppress that the cover member is separated from the annular member and interferes with the inner diameter side magnet field or the outer diameter side magnet field.

(5) A magnetic gear device (10) according to the present disclosure includes an inner diameter side magnet field (12), an outer diameter side magnet field (14) disposed on an outer diameter side relative to the inner diameter side magnet field (12), and the magnetic pole piece device (16) with the above configuration disposed between the inner diameter side magnet field (12) and the outer diameter side magnet field (14).

With the magnetic gear device according to the present disclosure, since the magnetic pole piece device having the above configuration is provided, it is possible to suppress the radial deformation in the annular member under the magnetic field formation, making it possible to suppress that the annular member interferes with the inner diameter side magnet field or the outer diameter side magnet field. Further, since the cover member provided for the above-described magnetic pole piece device has the small wall thickness, the torque transmission efficiency is not decreased.

Industrial Applicability

A magnetic pole piece device and a magnetic gear device including the magnetic pole piece device according to the present disclosure can suppress deformation in modulated magnetic pole against a magnetic force of a magnet without decreasing torque transmission efficiency. Thus, it is possible to suppress interference with the magnet field and to increase the degree of freedom in designing an annular member, allowing the present disclose to widely be applied to a rotary electric machine.

Reference Signs List

> 10 Magnetic gear
> 12 Inner diameter side magnet field
> 14 Outer diameter side magnet field
> 16 (16A, 16B) Magnetic pole piece device
> 18a, 18b, 22a, 22b Magnetic pole pair
> 20, 24, 34 Holding member
> 26 Coil
> 30 Annular member
> 32 Magnetic pole piece
> 36 (36a, 36b) Cover member
> 38 Continuous fiber
> 40 Matrix resin
> toc, tic Gap

**Claims**

1. A magnetic pole piece device disposed between an inner diameter side magnet field and an outer diameter side magnet field of a magnetic gear, comprising:

   > an annular member which includes a plurality of magnetic pole pieces disposed at intervals in a circumferential direction, and a plurality of holding members respectively disposed between the plurality of magnetic pole pieces; and
   > a cover member which is made of a composite material obtained by impregnating continuous fiber extending along the circumferential direction with a matrix resin,
   > wherein the cover member is disposed on at least one of an outer circumferential surface and an inner circumferential surface of the annular member,
   > wherein, when the cover member is disposed on the outer circumferential surface of the annular member, a relation of $1/6 \cdot toc \leq to \leq 1/2 \cdot toc$ is satisfied, where toc is a gap between the outer circumferential surface of the annular member and an inner circumferential surface of the outer diameter side magnet field and to is a thickness of the cover member, and
   > wherein, when the cover member is disposed on the inner circumferential surface of the annular member, a relation of $1/6 \cdot tic \leq ti \leq 1/2 \cdot tic$ is satisfied, where tic is a gap between the inner circumferential surface of the annular member and an outer circumferential surface of the inner diameter side magnet field and ti is a thickness of the cover member.

2. The magnetic pole piece device according to claim 1,
   wherein the cover member is disposed on at least the outer circumferential surface of the annular member.

3. The magnetic pole piece device according to claim 2,
   wherein the cover member is disposed on both the outer circumferential surface and the inner circumferential surface of the annular member.

4. The magnetic pole piece device according to any one of claims 1 to 3,
   wherein the cover member is attached to at least one of the outer circumferential surface and the inner circumferential surface of the annular member via an adhesive agent.

5. A magnetic gear device, comprising:

an inner diameter side magnet field;
an outer diameter side magnet field disposed on an outer diameter side relative to the inner diameter side magnet field; and
the magnetic pole piece device according to any one of claims 1 to 4 disposed between the inner diameter side magnet field and the outer diameter side magnet field.

# FIG. 1

# FIG. 2

# FIG. 3

16(16A)

# FIG. 4

16(16B)

# FIG. 5

Table 1

| Holding member 34 | | Radial displacement | Residual gap amount |
|---|---|---|---|
| Material | Elastic modulus | | |
| Resin | 3 GPa | 5.03 mm | −1.83 mm |
| Staple fiber FRP | 12 GPa | 1.35 mm | 1.85 mm |
| Titanium | 100 GPa | 0.24 mm | 2.96 mm |

# FIG. 6

Table 2

| Holding member 34 | | Cover member 36 | | | Radial displacement amount | Residual gap amount |
|---|---|---|---|---|---|---|
| Material | Elastic modulus | Material | Elastic modulus | | | |
| Resin | 3 GPa | CFRP | 150 GPa | 1 mm | 0.95 mm | 1.25 mm |
| Staple fiber FRP | 12 GPa | ″ | ″ | ″ | 0.65 mm | 1.55 mm |
| Resin | 3 GPa | ″ | ″ | 0.75 mm | 1.15 mm | 1.30 mm |
| ″ | ″ | ″ | ″ | 1.5 mm | 0.71 mm | 0.99 mm |
| Staple fiber FRP | 12 GPa | ″ | ″ | 0.75 mm | 0.73 mm | 1.72 mm |
| ″ | ″ | ″ | ″ | 1.5 mm | 0.53 mm | 1.17 mm |

# FIG. 7

# FIG. 8

## INTERNATIONAL SEARCH REPORT

| International application No. |
| --- |
| PCT/JP2020/046344 |

**A. CLASSIFICATION OF SUBJECT MATTER**
Int.Cl. F16H49/00(2006.01)i
FI: F16H49/00A

According to International Patent Classification (IPC) or to both national classification and IPC

**B. FIELDS SEARCHED**

Minimum documentation searched (classification system followed by classification symbols)
Int.Cl. F16H49/00

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-182638 A (INDUSTRIAL TECHNOLOGY RESEARCH INSTITUTE) 15 September 2011 (2011-09-15), fig. 1, 2, 8-10 | 1-5 |
| A | WO 2013/001557 A1 (HITACHI, LTD.) 03 January 2013 (2013-01-03), fig. 1-6 | 1-5 |
| A | WO 2012/014596 A1 (HITACHI METALS LTD.) 02 February 2012 (2012-02-02), fig. 1-10 | 1-5 |
| A | US 2011/0037333 A1 (MAGNOMATICS LIMITED) 17 February 2011 (2011-02-17), fig. 1-3 | 1-5 |

☐ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 January 2021 | 12 January 2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

International application No.

PCT/JP2020/046344

| JP 2011-182638 A | 15 September 2011 | US 2011/0215668 A1<br>fig. 1, 2, 8-10<br>CN 102237752 A |
|---|---|---|
| WO 2013/001557 A1 | 03 January 2013 | US 2014/0132099 A1<br>fig. 1-6 |
| WO 2012/014596 A1 | 02 February 2012 | US 2013/0127278 A1<br>fig. 1-10<br>CN 103038547 A<br>KR 10-2013-0042564 A |
| US 2011/0037333 A1 | 17 February 2011 | EP 2481953 A2<br>CN 102016358 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019232518 A
- US 9425655 B
- JP 5286373 B